# EUROPÄISCHE PATENTANMELDUNG

(11) **EP 4 137 020 A1**
(43) Veröffentlichungstag der Anmeldung: **22.02.2023**
(21) Anmeldenummer: 22180467.7
(22) Anmeldetag: 22.06.2022
(51) Int. Cl.: A47J 43/28

(54) **GRILLBESTECK**

(30) Priorität: 18.08.2021 DE 102021121475
(71) Anmelder: Brandivision GmbH, 40489 Düsseldorf (DE)
(72) Erfinder: Zimmermann, Dirk Hagen, 40489 Düsseldorf (DE)
(74) Vertreter: Klickow & Wetzel PartGmbB

(57) **Zusammenfassung**

Die Erfindung betrifft ein Grillbesteck mit mindestens einem in einem Gehäuse verstaubaren Werkzeug, wobei vorzugsweise zumindest ein Werkzeug als ein faltbarer Wender ausgebildet ist. Vorteilhafte Ausführungsformen der Erfindung kombinieren mehrere Werkzeuge wie beispielsweise eine Grillzange, ein Brotmesser und/oder eine Gabel miteinander.

## Beschreibung

Die Erfindung betrifft ein Grillbesteck aufweisend zumindest ein in einem Gehäuse des Grillbestecks verstaubares Werkzeug.

Ähnliche Vorrichtungen sind bereits als sogenannte Multi-Tools bekannt, die verschiedene Werkzeuge wie beispielsweise Zangen, Scheren, Messer und/oder Sägen als integrierte Werkzeuge aufweisen. Dabei sind die Werkzeuge zumeist durch eine Klappfunktion in einem Gehäuse des Multi-Tools verstaubar oder zur Verwendung aus diesem herausklappbar.

Kern der Funktionalität derartiger Multi-Tools ist es, dass eine einzige Vorrichtung verschiedene Werkzeuge in einem Gehäuse vereint, wobei die einzelnen Werkzeuge einzeln für eine Anwendung beispielsweise durch Ausklappen positionierbar sind und für einen sicheren Transport im Gehäuse verstaubar sind.

Speziell für Anwendungen bei der Zubereitung von Lebensmitteln sind derartige Multi-Tools zwar auch bereits bekannt, sind jedoch im Hinblick auf die Handhabung und Funktionalität bislang stark begrenzt.

Die Zubereitung von Lebensmitteln erfolgt in manchen Fällen, beispielsweise beim Grillen oder Camping, in Situationen, in denen das Mitführen einer Vielzahl von Werkzeugen im Sinne von Bestecken und Küchenwerkzeugen nicht komfortabel ist.

Eine Aufgabe der Erfindung ist es daher, ein Grillbesteck anzugeben, bei dem ähnlich zu einem Multi-Tool der Transport und die Handhabung zumindest eines Werkzeuges verbessert ist.

Diese Aufgabe wird erfindungsgemäß durch ein Grillbesteck gemäß Patentanspruch 1 gelöst.

Die im folgenden offenbarten Merkmale eines Grillbestecks sind sowohl einzeln als auch in allen ausführbaren Kombinationen Bestandteil der Erfindung.

Ein erfindungsgemäßes Grillbesteck weist ein als ein Griff verwendbares Gehäuse sowie mindestens ein in dem Gehäuse verstaubares Werkzeug auf.

In einer erfindungsgemäßen Ausführungsform des Grillbestecks ist ein Werkzeug als ein faltbarer Wender zum Wenden von Gargut ausgebildet, wobei die Fläche des Kopfes des Wenders zum Verstauen mithilfe der Faltfunktion verringerbar und zur Verwendung des Wenders zum Wenden von Gargut mithilfe der Faltfunktion vergrößerbar ist. Dadurch ist der Wender platzsparend verstaubar.

In einer bevorzugten Ausführungsform der Erfindung weist der Kopf des Wenders eine Mehrzahl von Kopfsegmenten auf, die fächerartig auf- und zusammenfaltbar sind.

Die Kopfsegmente sind in einer besonders bevorzugten Ausführungsform der Erfindung über Kontaktelemente derart miteinander verbunden, dass alle Kopfsegmente durch die Betätigung eines einzigen Kopfsegmentes auffächerbar sind. Dadurch ist die Handhabung des Wenders beim Auffalten verbessert.

Vorteilhaft sind die Kopfsegmente des Wenders mithilfe einer Fixiereinrichtung in einer aufgefächerten Position fixierbar. Dadurch ist verhinderbar, dass der Kopf des Wenders sich bei der Verwendung des Wenders unerwünscht zusammenfaltet.

In einer weiteren Ausführungsform der Erfindung ist an eine Kopplung der Kopfsegmente des Wenders mit einem schiebebetätigten Faltmechanismus gedacht, sodass der Kopf des Wenders durch die Betätigung eines Schiebers auffaltbar ist.

In einer weiteren Ausführungsvariante ist der Kopf des Wenders durch die Betätigung eines Schiebers in Abhängigkeit der Schieberichtung auf- und zusammenfaltbar.

Das Gehäuse des Grillbestecks weist in Ausführungsformen der Erfindung zwei Hauptschalen auf, die U-Profilförmig ausgebildet sind und die über mindestens ein Gehäusescharnier zusammenklappbar und aufklappbar sind, wobei diese in einem zusammengeklappten Zustand einen Stauraum für als Klappwerkzeuge ausgebildete Werkzeuge bilden.

In einer vorteilhaften Ausführungsform der Erfindung weist diese eine Verschlusseinrichtung auf, wobei die Gehäusehälften in einem zusammengeklappten Zustand mithilfe der Verschlusseinrichtung verschließbar sind, sodass das Gehäuse gegen ein unerwünschtes Öffnen sicherbar ist.

In bevorzugten Ausführungsformen der Erfindung ist auf mindestens einer der Hauptschalen im zusammengeklappten Zustand des Gehäuses außenseitig eine Abdeckschale derart angeordnet, dass zwischen der Hauptschale und der an dieser Hauptschale befestigten Abdeckschale ein Stauraum für ein als ein Schiebewerkzeug ausgebildetes Werkzeug gebildet ist.

Die Abdeckschale ist in bevorzugten Ausführungsformen der Erfindung mithilfe entsprechender Verbindungsmittel lösbar mit der jeweiligen Hauptschale verbunden, sodass ein darunterliegendes Werkzeug entnehmbar ist. Dies ermöglicht eine einfache Wartung oder den Ersatz von entsprechenden Werkzeugen sowie eine gründliche Reinigung des Grillbestecks.

Besonders bevorzugt sind die Verbindungmittel derart ausgebildet, dass eine parallele Bewegungsausführung der Abdeckschale zur jeweiligen Hauptschale beim Verbinden oder Lösen der Abdeckschale realisiert ist. Dies ist in vorteilhaften Ausführungsformen der Erfindung durch entsprechende Führungsstrukturen realisiert.

In Ausführungsformen der Erfindung weist das Grillbesteck mindestens ein Schiebewerkzeug auf, das als ein Messer, eine Gabel oder ein Spieß ausgebildet ist.

Bevorzugt weist ein erfindungsgemäßes Grillbesteck sowohl ein als ein Messer ausgebildetes Schiebewerkzeug als auch ein als eine Gabel oder ein Spieß ausgebildetes Schiebewerkzeug auf.

In anderen Ausführungsformen der Erfindung kann das Grillbesteck auch zur Aufnahme eines Klappwerkzeugs in zumindest einem Stauraum zwischen einer Hauptschale und einer Abdeckschale ausgebildet sein.

In einer bevorzugten Ausführungsform der Erfindung weist das Grillbesteck zumindest eine Arretierungsfeder für mindestens ein Klappwerkzeug auf, wobei die Arretierungsfeder derart vorgespannt ist, dass diese eine in Richtung der eingeklappten Position des Klappwerkzeugs wirkende Kraft auf das jeweilige Klappwerkzeug ausübt. Dadurch ist ein entsprechendes Klappwerkzeug gegen ein ungewolltes Ausklappen gesichert.

In einer Ausführungsform der Erfindung weist das Grillbesteck ein als eine Grillzange ausgebildetes Klappwerkzeug auf.

In einer bevorzugten Ausführungsform der Erfindung weist das Grillbesteck Auflageschultern zur zentralen Ausrichtung der Zange im zusammengeklappten Zustand des Grillwerkzeugs auf.

Als weitere Klappwerkzeuge eines erfindungsgemäßen Grillbestecks sind beispielsweise Messer, Dosen- und/oder Flaschenöffner denkbar.

Eine Anwendung eines erfindungsgemäßen Grillbestecks ist selbstverständlich nicht auf das Grillen beschränkt. Vielmehr ist das erfindungsgemäße Konzept allgemein auf Küchenwerkzeuge anwendbar, sodass diese insbesondere für mobile Anwendungen platzsparend und sicher transportierbar sind.

In den nachfolgend erläuterten Figuren ist eine beispielhafte Ausführungsform der Erfindung dargestellt. Es zeigen:
- Figur 1:: Eine perspektivische Darstellung einer erfindungsgemäßen Ausführungsform eines Grillbestecks,
- Figur 2:: Eine Seitenansicht der Ausführungsform des erfindungsgemäßen Grillbestecks,
- Figur 3:: Eine Draufsicht auf die Ausführungsform des erfindungsgemäßen Grillbestecks,
- Figur 4:: Eine Ansicht von unten der Ausführungsform des erfindungsgemäßen Grillbestecks,
- Figur 5:: Eine Seitenansicht einer Hauptschale des Gehäuses der Ausführungsform des erfindungsgemäßen Grillbestecks,
- Figur 6:: Eine Ansicht der Hauptschale gemäß Figur 5 von vorn,
- Figur 7:: Eine Seitenansicht einer Abdeckschale des Gehäuses der Ausführungsform des erfindungsgemäßen Grillbestecks,
- Figur 8:: Eine Ansicht der Abdeckschale gemäß Figur 7 von vorn,
- Figur 9:: Eine perspektivische Ansicht einer Gehäusehälfte gebildet aus einer Hauptschale und einer Abdeckschale,
- Figur 10:: Eine perspektivische Ansicht der Ausführungsform des erfindungsgemäßen Grillbestecks mit ausgezogenen Schiebewerkzeugen,
- Figur 11:: Eine perspektivische Ansicht der Ausführungsform des erfindungsgemäßen Grillbestecks mit teilweise ausgeklappten Klappwerkzeugen,
- Figur 12:: Eine Detailansicht eines teilweise montierten erfindungsgemäßen Grillbestecks im Bereich eine Klappwerkzeugs,
- Figur 13:: Eine perspektivische Ansicht der Ausführungsform des erfindungsgemäßen Grillbestecks mit teilweise ausgeklapptem Wender als Klappwerkzeug,
- Figur 14:: Eine perspektivische Ansicht der Ausführungsform des erfindungsgemäßen Grillbestecks in teilweise demontiertem Zustand mit ausgeklapptem und aufgefächertem Wender und
- Figur 15a-c:: Perspektivische Ansichten des Wenders in zusammengefaltetem Zustand (Fig. 14a), beim Auffalten (Fig. 14b) und im aufgefalteten Zustand (Fig. 14c).

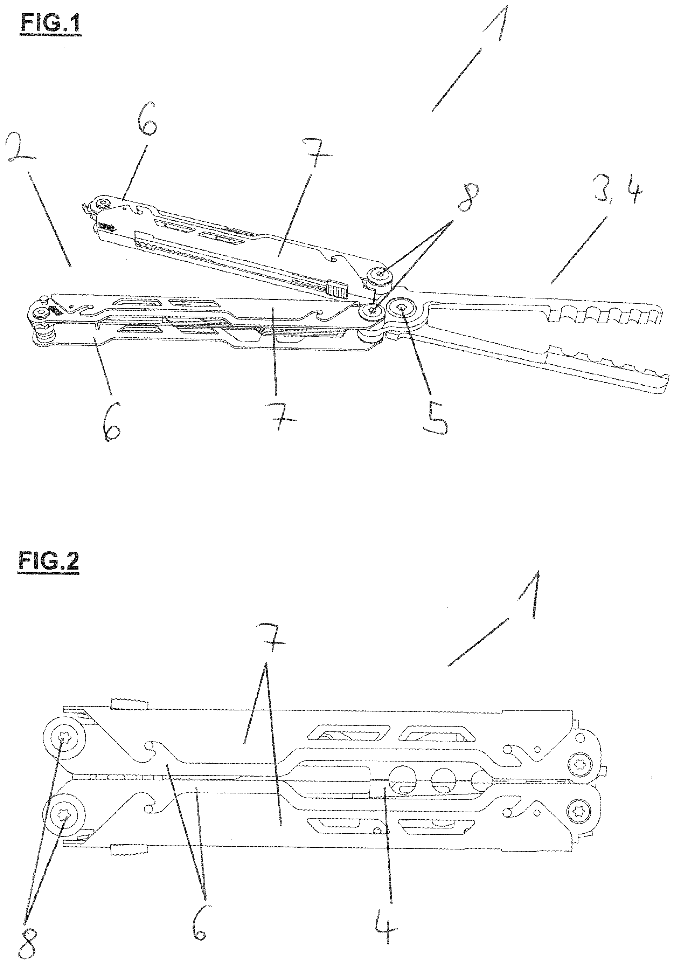

In Figur 1 ist eine erfindungsgemäße Ausführungsform eines Grillbestecks (1) in einer perspektivischen Ansicht dargestellt.

Das Gehäuse (2) des Grillbestecks (1) ist aufgeklappt, sodass ein als eine Grillzange (4) ausgebildetes Werkzeug (3) verwendbar ist. Die Grillzange (4) weist eine gefederte Gelenkachse (5) auf, wobei die Federung die Grillzange (4) öffnet. Dadurch ist bei der Bedienung der Grillzange (4) kein Umgreifen zum Wechsel zwischen Öffnen und Schließen der Grillzange (4) erforderlich.

Das Gehäuse (2) ist in zwei Gehäusehälften unterteilt, die die Schenkel des Handgriffs der Grillzange (4) bilden.

Jede Gehäusehälfte weist eine Hauptschale (6) und eine Abdeckschale (7) auf, wobei die Gehäusehälften über jeweils ein Gehäusescharnier (8) zum Öffnen oder Schließen des Gehäuses (2) klappbar sind.

Figur 2 zeigt eine Seitenansicht der in Figur 1 gezeigten Ausführungsform eines erfindungsgemäßen Grillbestecks (1) in einem zusammengeklappten Zustand. Die Grillzange (4) ist zwischen den Gehäusehälften innerhalb der Hauptschalen (6) positioniert.

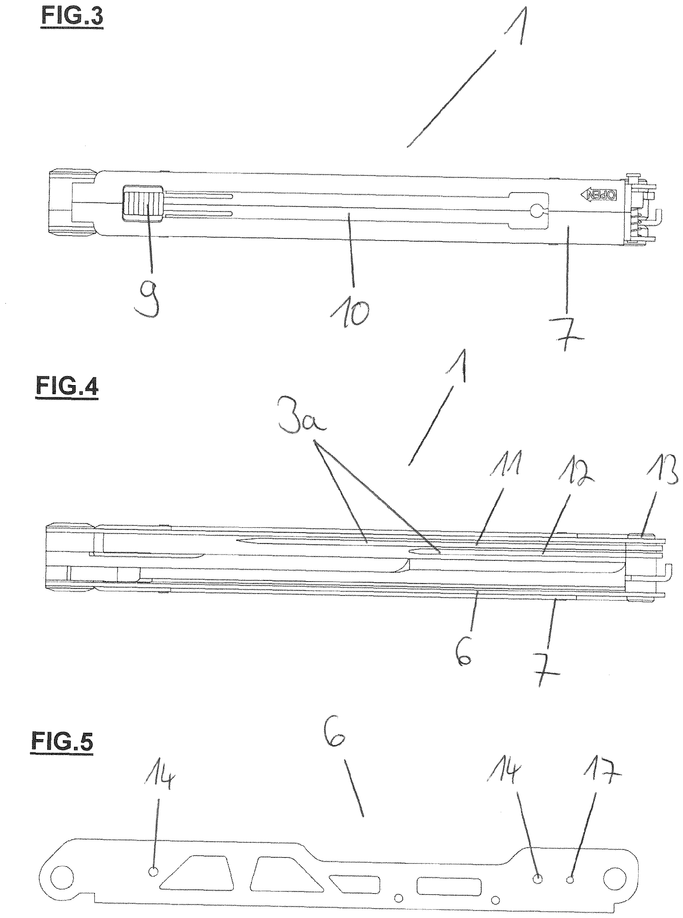

Figur 3 zeigt die erfindungsgemäße Ausführungsform eines Grillbestecks (1) in einer Draufsicht. Zu sehen ist der Schieber (9) eines als ein Schiebewerkzeug (3b) ausgebildeten Werkzeugs (3) in einem in das Gehäuse (2) eingeschobenen Zustand des Schiebewerkzeugs (3b).

In der Abdeckschale (7) ist eine Linearführung (10) durch eine längliche Öffnung realisiert, die an ihren Enden jeweils einen Rastpunkt zur Fixierung des Schiebewerkzeugs (3b) in der jeweiligen Position aufweist.

In Figur 4 ist das Grillbesteck (1) in einem aufgeklappten Zustand dargestellt, sodass weitere Klappwerkzeuge (3a) erreichbar sind.

Die Klappwerkzeuge (3a) sind als ein Messer (11) und als ein Dosen- und Flaschenöffner (12) ausgebildet und sind über eine gemeinsame Drehachse (13) herum klappbar.

In einem eingeklappten Zustand befinden sich die Klappwerkzeuge (3a) innerhalb einer Hauptschale (6) des Gehäuses (2).

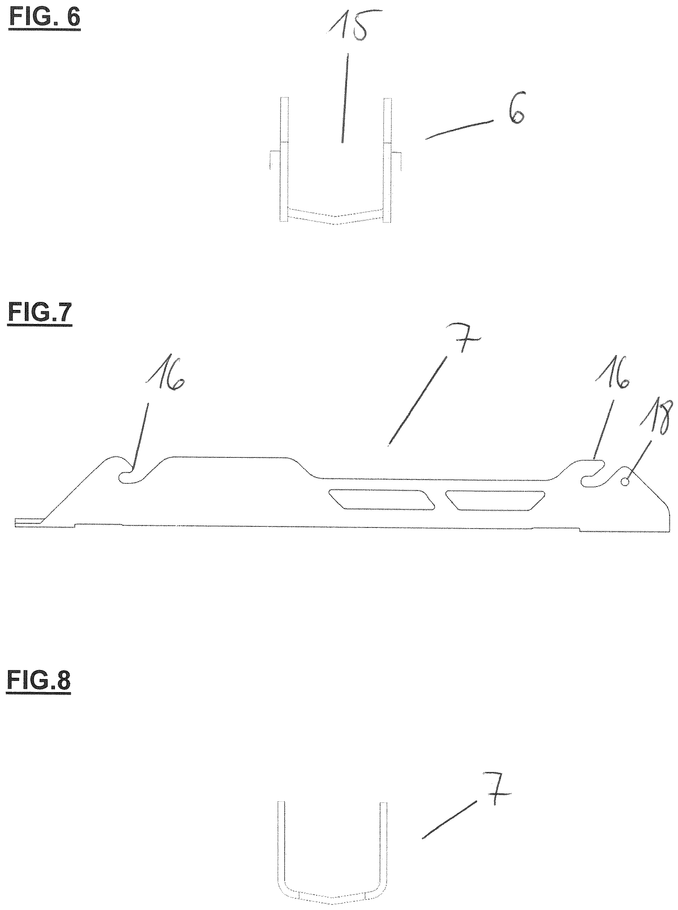

Figur 5 zeigt eine Ausführungsform einer Hauptschale (6) und Figur 7 einer Abdeckschale (7) eines erfindungsgemäßen Grillbestecks (1) in einer Seitenansicht.

Zur Verbindung von Hauptschale (6) und Abdeckschale (7) weisen diese lösbare Verbindungsmittel auf. Vorliegend sind diese als zwei Zapfen (14) an der Hauptschale (6), die in der Abdeckschale (7) in korrespondierende Öffnungen, hier realisiert durch zwei Führungsschlitze, die jeweils einen Haken (16) bilden, einführbar sind, sowie einen Schnapp- bzw. Rastverschluss ausgebildet sind. Der Rastverschluss ist gebildet durch ein Rastelement (17), das aus der Oberfläche der Hauptschale (6) herausragt und das bei einer Verbindung mit einer Abdeckschale (7) in eine korrespondierende Öffnung (18) einrastet bzw. schnappt.

Die so gebildete Mimik ermöglicht beim Verbinden oder Lösen der Hauptschale (6) mit/von der Abdeckschale (7) durch die an vier Positionen und somit in allen Endbereichen realisierte Führung eine präzise und passgenaue Bewegung zueinander.

Die Führungsschlitze weisen jeweils parallel verlaufenden ersten Abschnitt auf, der schräg nach oben verläuft. Dadurch wird die Abdeckschale (7) beim Lösen von der Hauptschale (6) durch das Ausüben einer Kraft auf die Abdeckschale (7) in paralleler Richtung zur Längsseite der Hauptschale (6) aus dem Rastpunkt der Verbindungsmittel heraus und von der Hauptschale (6) wegbewegt.

Im Endbereich weisen die Führungsschlitze jeweils einen etwa parallel zur Längsseite der Hauptschale (6) verlaufenden Abschnitt auf. Sind die korrespondierenden Zapfen (14) in diesen Bereich geführt, ist die Abdeckschale (7) nur parallel zur Hauptschale (6) verschiebbar ohne den Abstand zwischen Abdeckschale (7) und Hauptschale (6) zu verändern.

In den Figuren 6 und 8 sind eine Hauptschale (6) bzw. eine Abdeckschale (7) in einer Ansicht von vorn dargestellt, wobei ersichtlich ist, dass diese jeweils als ein U-Profil ausgebildet sind.

Begrenzt durch die U-Profile zweier gegenüberliegender Hauptschalen (6) erstreckt sich ein erster Stauraum (15) eines erfindungsgemäßen Grillbestecks (1).

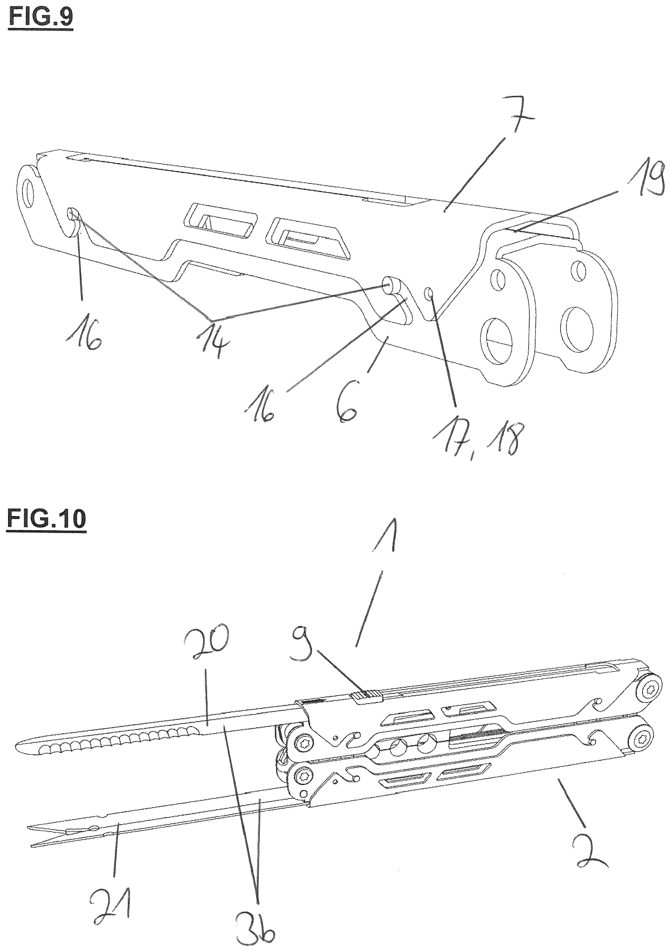

Figur 9 zeigt eine Gehäusehälfte eines erfindungsgemäßen Grillbestecks (1), wobei eine Hauptschale (6) und eine Abdeckschale (7) mit Verbindungsmitteln entsprechend der Erläuterungen zu den Figuren 5 bis 8.

Dabei ist ersichtlich, dass die Hauptschale (6) mit der Abdeckschale (7) dabei derart verbunden ist, dass diese auf der Außenseite (hier oben) einen Abstand voneinander aufweisen, sodass ein Zwischenraum gebildet wird. Dieser ist als ein zweiter Stauraum (19) nutzbar, in dem beispielsweise Schiebewerkzeuge (3b) oder Klappwerkzeuge (3a) angeordnet sein können.

In Figur 10 ist die erfindungsgemäße Ausführungsform eines Grillbestecks (1) in einer perspektivischen Ansicht und mit zwei ausgezogenen Schiebewerkzeugen (3b) dargestellt. Ein erstes Schiebewerkzeug (3b) ist dabei als ein Schiebemesser (20), insbesondere als ein Brotmesser, und ein zweites Schiebewerkzeug (3b) ist als eine Gabel (21) ausgebildet.

Die Schiebewerkzeuge (3b) sind gemäß vorstehender Beschreibung mithilfe eines Schiebers (9) zur Verwendung aus dem Gehäuse (2) herausschiebbar oder zum Verstauen in das Gehäuse (2) hineinschiebbar.

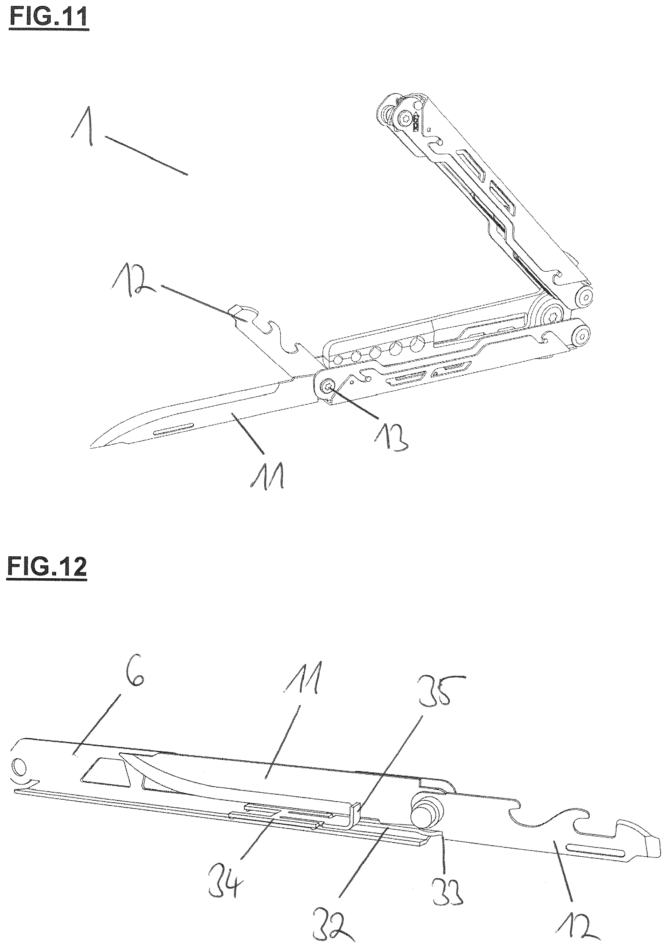

Figur 11 zeigt ein erfindungsgemäßes Grillbesteck (1) in einer teilweise geöffneten Stellung mit einem vollständig ausgeklappten Messer (11) und einem teilweise ausgeklappten Dosen- und Flaschenöffner (12) als Klappwerkzeuge (3a).

In Figur 12 ist eine Detailansicht im Bereich der Klappwerkzeuge (3a) aus Figur 11 dargestellt. Dabei ist eine Arretierungsfeder (32) erkennbar, die mehrere Funktionen im Hinblick auf das Klappwerkzeug (3a) erfüllt. Zum einen weist die Arretierungsfeder (32) eine Vorspannung derart auf, dass diese auf die Klappwerkzeuge (3a) eine Kraft in Richtung der eingeklappten Position ausübt, solange diese nicht vollständig ausgeklappt sind. Dies sichert die Klappwerkzeuge (3a) vor ungewolltem Ausklappen. Weiterhin realisiert die Arretierungsfeder (32) gemeinsam mit einer Anschlagkante (33) am jeweiligen Klappwerkzeug (3a) einen mechanischen Anschlag bzw. Endpunkt für die Klappwerkzeuge (3a) im ausgeklappten Zustand.

Zur Befestigung in der Hauptschale (6) des Grillbestecks (1) weist die Arretierungsfeder (32) einen vorliegend H-förmig ausgebildeten Grundkörper (34) auf, der über kleine Zapfen in entsprechende Aufnahmen in der Hauptschale (6) einrastbar ist.

Weiterhin weist die Arretierungsfeder (32) ein Distanzelement (35) auf, das in den Innenraum der Hauptschale (6) hineinragt und das gemeinsam mit korrespondierenden Einrichtungen als Auflager für die Grillzange (4) dient.

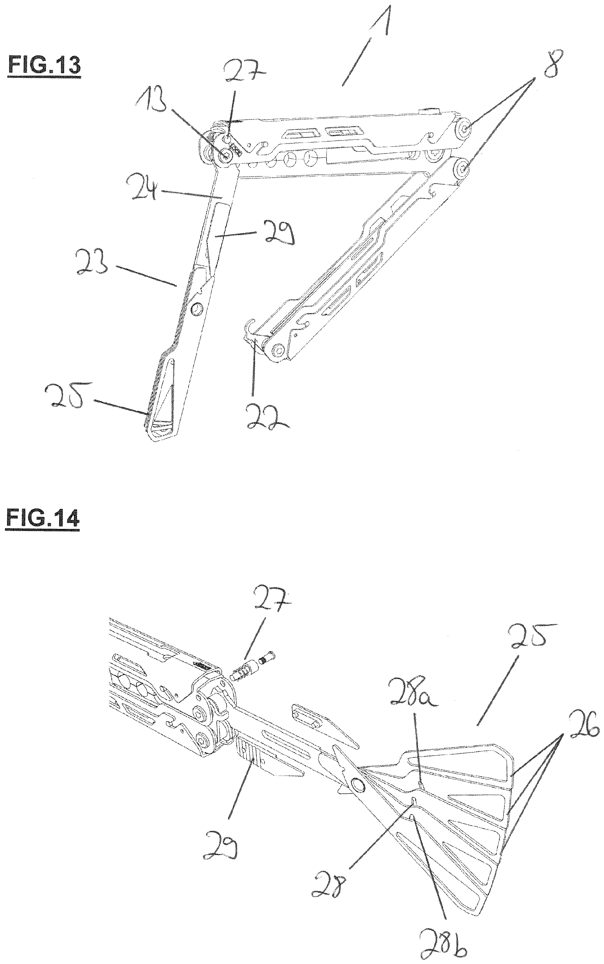

Figur 13 zeigt das Grillbesteck (1) in einem teilweise aufgeklappten Zustand. Dabei sind zwei Aspekte des Grillbestecks (1) sichtbar. Zum einen weist das Grillbesteck (1) einen als ein Haken ausgebildeten Gehäuseverschluss (22) auf, mit dem die Gehäusehälften in einem zusammengeklappten Zustand fixierbar sind.

Zum anderen ist ein weiteres Klappwerkzeug (3b) ausgebildet als ein Wender (23) teilweise aus dem Grillbesteck (1) ausgeklappt. Der Wender (23) weist einen Stiel (24) und einen Kopf (25) auf.

Die Einzelheiten des Wenders (23) sind in Figur 14 zu erkennen, in der ein teilweise demontierter Wender (23) mit einigen Einzelteilen zu sehen ist.

Der Kopf (25) des Wenders (23) weist eine Mehrzahl, vorliegend fünf, Kopfsegmente (26) auf, die fächerartig zusammen- und auffaltbar sind.

Der Stiel (24) des Wenders (23) ist an einer Drehachse (13) des Grillbestecks (1) am Gehäuse (2) befestigt, wobei die Position des Wenders in einem eingeklappten sowie in einem ausgeklappten Zustand mithilfe einer Arretiereinrichtung (27) arretierbar ist, sodass ein unerwünschtes Ein- oder Ausklappen des Wenders (23) vermieden wird.

Die Kopfsegmente (26) sind über Kontaktelemente (28) miteinander verbunden, sodass die Bewegung eines Kopfsegmentes (26) beim Auf- und Zufalten auf die anderen Kopfsegmente (26) übertragen wird. Dazu weisen in dem dargestellten Ausführungsbeispiel die Kopfsegmente (26) Zapfen (28a) und Schlitze (28b) auf, wobei stets ein Zapfer (28a) eines Kopfsegments (26) in den Schlitz (28b) eines benachbarten Kopfsegments (26) eingreift. Sobald ein Kopfsegment (26) gegenüber dem benachbarten Kopfsegment (26) soweit verschwenkt ist, dass der Zapfen (28a) am Ende des Schlitzes (28b) des jeweiligen Kontaktelements (28) angelangt ist, wird das benachbarte Kopfsegment (26) mitbewegt. Diese Übertragung der Bewegung setzt sich entsprechend über alle Kopfsegmente (26) hin fort, bis der Kopf (25) des Wenders (23) vollständig aufgefächert oder zusammengefaltet ist.

Zur Unterstützung des Auffächerns weist der Wender (23) ein Schiebeelement (29) auf, das zugleich als Fixiereinrichtung wirkt.

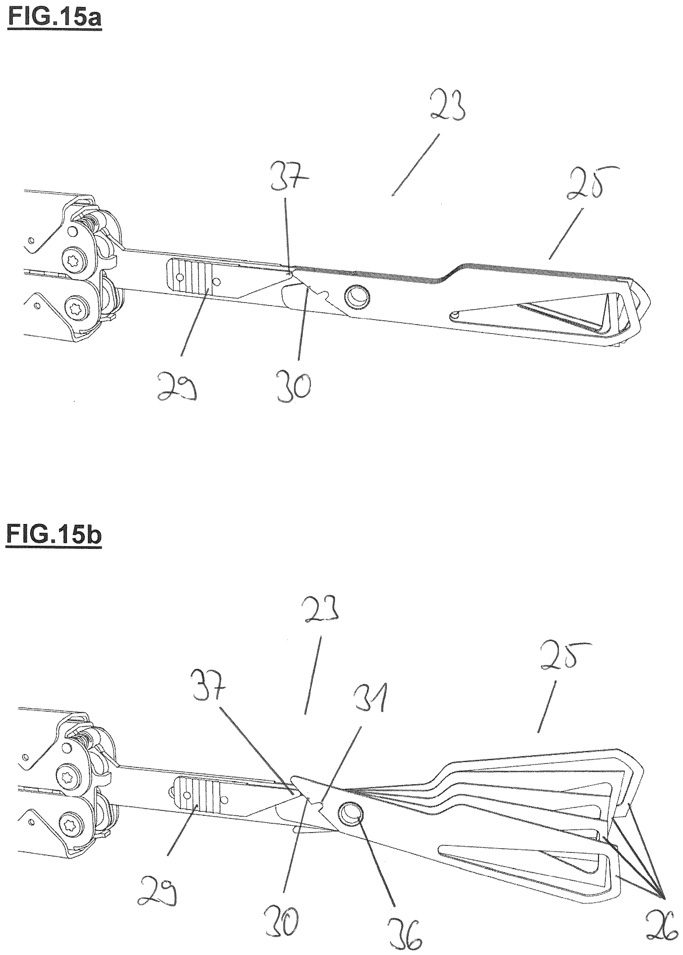

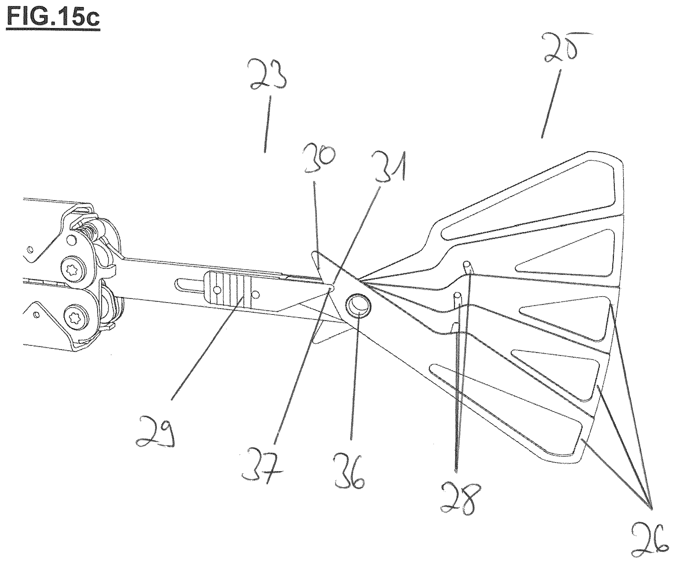

Die Funktionsweise des Schiebeelements (29) bzw. der Fixiereinrichtung ist in den Figuren 15a, 15b und 15c dargestellt.

Das Schiebeelement (29) ist im Bereich des Stiels (24) des Wenders (23) linear geführt und weist auf seiner dem Kopf (25) zugewandten Seite eine Spitze (37) auf, die in einer Ebene mit einem außenliegenden Kopfsegment (26) positioniert ist. Das außenliegende Kopfsegment (26) weist an seiner dem Schiebeelement (29) zugewandten Ende eine Gleitkante (30) auf. Wird das Schiebeelement (29) nun in Richtung des Kopfes (29) verschoben, so gleitet die Spitze (37) an der Gleitkante (30) entlang. Durch den Verlauf der Gleitkante (30) in Relation zur Drehachse (36) der Kopfsegmente (26) wird das außenliegende Kopfsegment (26) dabei ausgeklappt und überträgt diese Bewegung mithilfe der Kontaktelemente (28) auf die übrigen Kopfsegmente (26). In der aufgefächerten Position des Kopfes (25) angelangt ist eine Rastkerbe (31) in der Gleitkante (30) angeordnet, in die die Spitze (37) des Schiebeelements (29) einrastet. Dadurch ist der Kopf (25) des Wenders (23) im aufgefächerten Zustand fixiert.

Das Zusammenfalten der Kopfsegmente (26) zum Verstauen des Wenders (23) im Gehäuse (2) des Grillbestecks (1) erfolgt in der dargestellten Ausführungsform der Erfindung durch ein manuelles Zusammenschieben der Kopfsegmente (26) nachdem das Schiebeelement (29) durch eine Bewegung vom Kopf (25) weg aus der Fixierposition in der Rastkerbe (31) herausbewegt wurde.

In alternativen Ausführungsformen der Erfindung ist das Schiebeelement (29) auch zum Zusammenfalten der Kopfsegmente (26) mit diesen mechanisch verbunden.

## Patentansprüche

1. Grillbesteck (1) aufweisend ein als ein Griff verwendbares Gehäuse (2) sowie mindestens ein in dem Gehäuse (2) verstaubares Werkzeug (3), **dadurch gekennzeichnet, dass** mindestens ein Werkzeug (3) als ein faltbarer Wender (23) zum Wenden von Gargut ausgebildet ist, wobei die Fläche des Kopfes (25) des Wenders (23) zum Verstauen mithilfe der Faltfunktion verringerbar und zur Verwendung des Wenders (23) zum Wenden von Gargut mithilfe der Faltfunktion vergrößerbar ist.

2. Grillbesteck (1) nach Anspruch 1, **dadurch gekennzeichnet, dass** der Kopf (25) des Wenders (23) eine Mehrzahl von Kopfsegmenten (26) aufweist, die fächerartig auf- und zusammenfaltbar sind.

3. Grillbesteck (1) nach Anspruch 2, **dadurch gekennzeichnet, dass** Die Kopfsegmente (26) über Kontaktelemente (28) derart miteinander verbunden sind, dass alle Kopfsegmente (16) durch die Betätigung eines einzigen Kopfsegmentes (26) auffächerbar sind.

4. Grillbesteck (1) nach einem der Ansprüche 2 und 3, **dadurch gekennzeichnet, dass** Die Kopfsegmente (26) des Wenders (23) mithilfe einer Fixiereinrichtung (29) in einer aufgefächerten Position fixierbar sind.

5. Grillbesteck (1) nach einem der Ansprüche 1 bis 4, **dadurch gekennzeichnet, dass** Gehäuse (2) weist zwei Hauptschalen (6) auf, die U-Profilförmig ausgebildet sind und die über mindestens ein Gehäusescharnier (8) zusammenklappbar und aufklappbar sind, wobei diese einen Stauraum (15) für als Klappwerkzeuge (3a) ausgebildete Werkzeuge (3) bilden.

6. Grillbesteck (1) nach Anspruch 5, **dadurch gekennzeichnet, dass** auf mindestens einer der Hauptschalen (6) außen eine Abdeckschale (7) angeordnet ist, sodass zwischen der Hauptschale (6) und der Abdeckschale (7) ein zweiter Stauraum (19) für ein als ein Schiebewerkzeug (3b) ausgebildetes Werkzeug (3) gebildet ist.

7. Grillbesteck (1) nach Anspruch 6, **dadurch gekennzeichnet, dass** die Abdeckschale (7) ist lösbar mit der jeweiligen Hauptschale (6) verbunden, sodass ein darunterliegendes Werkzeug (3) entnehmbar ist.

8. Grillbesteck (1) nach einem der Ansprüche 1 bis 7, **dadurch gekennzeichnet, dass** dieses mindestens ein Schiebewerkzeug (3b) aufweist, das als ein Schiebemesser (20), eine Gabel (21) oder ein Spieß ausgebildet ist.

9. Grillbesteck (1) nach einem der Ansprüche 1 bis 8, **dadurch gekennzeichnet, dass** dieses mindestens ein Klappwerkzeug (3a) aufweist, wobei dem Klappwerkzeug (3a) eine Arretierungsfeder (32) zugeordnet ist.

10. Grillbesteck (1) nach einem der Ansprüche 1 bis 9, **dadurch gekennzeichnet, dass** dieses ein als eine Grillzange (4) ausgebildetes Klappwerkzeug (3a) aufweist.

11. Grillbesteck (1) nach Anspruch 10, **dadurch gekennzeichnet, dass** dieses Auflageschultern (35) zur zentralen Ausrichtung der Grillzange (4) im zusammengeklappten Zustand des Grillwerkzeugs (1) aufweist.
